Europäisches Patentamt

(19) European Patent Office

Office européen des brevets

(11) Publication number: **0 220 889 B1**

## EUROPEAN PATENT SPECIFICATION

(45) Date of publication of patent specification: **12.06.91**   (51) Int. Cl.⁵: **A23F 5/32, A23F 5/40**

(21) Application number: **86308038.8**

(22) Date of filing: **16.10.86**

(54) Coffee treatment process and product.

(30) Priority: **18.10.85 GB 8525725**

(43) Date of publication of application:
**06.05.87 Bulletin 87/19**

(45) Publication of the grant of the patent:
**12.06.91 Bulletin 91/24**

(84) Designated Contracting States:
**AT BE CH DE ES FR GB GR IT LI LU NL SE**

(56) References cited:
**DE-A- 1 692 238**
**FR-A- 2 056 936**
**GB-A- 2 006 603**
**GB-A- 2 022 394**

(73) Proprietor: **GENERAL FOODS LIMITED**

**Banbury Oxfordshire, OX16 7QU(GB)**

(72) Inventor: **Lascelles, Le Gay John**
**2 Old Vicarage Gardens Cropredy**
**Nr. Banbury Oxon(GB)**
Inventor: **Hampson, Kim Suzanne**
**6 Windsor Close Kings Sutton**
**Nr. Banbury Oxfordshire, OX17 3QT(GB)**

(74) Representative: **Allard, Susan Joyce et al**
**BOULT, WADE & TENNANT, 27 Furnival**
**Street**
**London EC4A 1PQ(GB)**

## Description

The present invention relates to a process for the production of a coffee product and to a coffee product so-produced. More particularly, the invention is concerned with a process in which roast coffee of very finely ground particle size is combined with soluble coffee to produce a freeze dried product which has an improved in cup appearance and also has a desirable cup aroma and flavour.

There has been an interest in forming admixtures of soluble coffee with various percentages, usually less than 15% by weight, of finely ground roast coffee. These mixtures have the advantage that they incorporate aromatic and flavourful elements of roast coffee into the product. Generally the admixtures which have been commercially sold have been admixtures of soluble coffee powder and roast and ground particles which, though homogenously mixed, result in poor flowability and poor ease of spooning out. The roast and ground particles contained in such products have generally been of a particle size such that they will not stay in suspension and tend to settle out on reconstition of the product with water and/or milk and form an undesirably large quantity of sediment.

A proposal for producing a coffee product which incorporates roast and ground coffee therein is described in British Patent No.2022394. This process involves the steps of air cooling freshly roasted coffee beans, quenching the cooled beans with liquid nitrogen to freeze the beans, grinding the beans to produce colloidal roast and ground coffee having a particle size of less than 45 $\mu$m, adding the frozen colloidal roast and ground coffee to a chilled coffee extract, and drying the colloidal coffee containing extract. The coffee product produced by this process suffers from the disadvantage that the colloidal roast and ground coffee having a particle size of less than 45 $\mu$m is not evenly and homogenously dispensed throughout the final coffee product. This results in an inability to provide a product with a consistent taste, aroma and in-cup appearance.

Another proposal for producing a coffee product which incorporates roast and ground coffee therein is described in our British Patent No. 2006603. This process involves the combination of spray dried soluble coffee and finely ground roast coffee into agglomerates, the agglomerates preferably having an average particle size greater than 850 $\mu$m.

We have now developed a process for the production of a substantially homogeneous freeze dried coffee product which includes finely ground roast coffee particles dispersed therein.

Accordingly, the present invention provides a process for the preparation of a substantially homogeneous freeze dried coffee product, which process comprises the steps of

i) mixing a coffee extract at a temperature in the range of from 0° to 20°C with from 10 to 60% by weight of roast and ground coffee particles based on the weight of the two coffee constituents, the said particles having a particle size such that 98% by weight of the ground coffee passes a 75 $\mu$m mesh;

ii) subjecting the mixture from step (i) to homogenization;

iii) passing the homogenized mixture from step (ii) to a mixing tank and adding thereto at least an equivalent weight of coffee extract at a temperature in the range of from minus 5 to 30°C and from 20 to 40% by weight of frozen coffee fines based on the weight of the homogenized extract and the coffee extract;

iv) freezing the mixture from step (iii);

v) grinding the frozen coffee product;

vi) screening the ground frozen coffee product from step (v); and

vii) subjecting frozen particles of an appropriate size to freeze drying.

The coffee extract in step (i) of the process preferably has a solids content of 20 to 60 percent by weight, preferably from 35 to 45 percent by weight. The mixing in step (i) is preferably carried out at a temperature in the range of from 5 to 15°C and the mixing is preferably carried out using a high speed mixer to maintain all of the praticles in suspension.

Preferably from 20 to 40% by weight roast and ground coffee particles are added in step (i) of the process. The particle size distribution of the coffee particles is preferably 99.9% less than 100 $\mu$m, 98% less than 75 $\mu$m, 95% less than 60 $\mu$m, 90% less than 45 $\mu$m and 50% less than 15 $\mu$m.

The dry grinding of roasted coffee beans to relatively coarse grinds is a well known operation in the coffee industry. Various workers have described the fine grinding of roasted coffee whilst preserving its aromatic character, by employing a cryogenic grinding technique involving a single stage; in such a method the roasted coffee beans are pre-cooled before grinding to temperatures below 10°C (50°F), for example as described in United States Patent Specification No. 3,261,689. Alternatively, it has been proposed to feed liquid nitrogen into a grinding mill during the grinding of roasted coffee beans, as described in Food Engineering, May 1962, pages 62 and 63. Other methods of grinding roasted coffee beans are described in British Patent Specifications Nos. 1,424,264 and 1,476,854. These methods, however, still provide only relatively fine grinds and do not provide in general the most desired average particle sizes of down to 20 $\mu$m or less.

Desirably in practising the present invention, the fine-subdivision of roasted coffee beans is accomplished by a method of grinding which incorporates both pre-cooling of the roasted coffee beans to below 0°C and preferably to below minus 45°C, coupled with the use of a classification of the finely ground roasted coffee employing cooled nitrogen in the classification step instead of the more conventional air. The pre-cooling is preferably carried out with liquid nitrogen. The fine-subdivision of the roasted coffee beans may be effected using an impact mill fitted with means for classification which allows only ground coffee in the required particle size to leave as product from the mill. However, the classification system may be external to the mill, with the provision for return of the coarser fraction ot the mill. Other means for providing the required particle size of finely ground roasted coffee with acceptable minimal loss of volatile components may be used. Certain commercial types of high speed impact (or other mills), such as pin-disc mills, are available, which can achieve the required particle size without need for either external or internal classification.

The mixture from step (i) of the process of the invention is homogenized, preferably by passage through a high shear mechanical mixer. The homogenization step breaks up any aggregates of colloidal particles and provides a substantially uniform distribution of the particles of roast and ground coffee in the coffee extract. The homogenization may also be effected using an in-line sonic mixer.

The homogenized mixture from step (ii) is then passed to a mixing tank which is preferably a tank fitted with a ribbon-type helix. Additional coffee extract, preferably having a solids content of from 35 to 45% by weight is added thereto. The additional extract is added to the homogenized mixture in an at least equivalent amount and preferably from 3 to 5 times the amount of extract is added based on the weight of the homogenized extract. The additional extract is added at a temperature in the range of from -5 to 30°C, preferably at a temperature of from -5 to 10°C, more preferably at a temperature of from 0 to 2°C.

Frozen coffee fines from the final step of the process of the invention are also preferably recycled to the homogenized mixture in step (iii). The frozen coffee fines are preferably at a temperature in the range of -10° to -50°C and have a particle size of less than 200 μm. The frozen coffee fines are preferably added in an amount of from 30 to 40% by weight based upon the weight of the homogenized extract and the additional coffee extract. The frozen coffee fines lower the temperature of the mixture significantly, some of the coffee fines melting in the process. The remainder of the coffee fines are thought to act as nucleates around which the mixture begins to freeze.

The mixture leaves the mixing tank in step (iii) of the process generally at a temperature in the range of from -10°C to -2°C and is then subjected to freezing. The frozen product is then ground and screened. Generally, frozen coffee particles having a particle size above 200 μm are considered appropriate for freeze drying. Those particles having a particle size of less than 200 μm are then preferably recycled as coffee fines to step (iii) of the process.

The freeze drying of the particles having a particle size above 200 μm is carried out according to conventional techniques such as are described in Coffee Technology by M. Sivetz and N.W. Desrosier published by Avi Publishing Company Inc. (1979).

It will be understood that the process of the present invention may be carried out in a batchwise or continuous manner, although continuous operation is preferred.

The amount of the additional coffee extract and the frozen coffee fines added in step (iii) of the process of the invention are preferably chosen so that the resulting coffee product has a roast and ground coffee content of from 5 to 20% by weight. However, a coffee product having a higher roast and ground coffee content of up to 50% by weight may be desirable either for use as a filter coffee or for use as a Turkish-style coffee.

Whilst not wishing to be bound by theory, it is believed that the combination of the viscosity of the mixture in step (iii) of the process of the invention and the homogenization in step (ii) serve to maintain the ground coffee particles in suspension uniformly and homogeneously during the freeze drying step. For example, at a 40% total solids concentration the mixture in step (iii) has a viscosity of above 0.07 Pas (above 70 cps).

The freeze dried product produced according to the present invention differs from the prior art freeze dried product described in British Patent No. 2022394 in that the roast and ground coffee particles are uniformly and homogeneously dispersed through the product.

Thus, in another aspect the present invention provides a substantially homogeneous freeze dried coffee product which comprises soluble coffee particles and finely ground roast coffee, the finely ground roast coffee being homogenously and uniformly dispersed thoughout the product and being present in an amount of from 2 to 50% by weight based on the weight of the two coffee constituents and having a particle size such that 98% by weight of the ground coffee passes a 75 μm mesh.

Preferably the coffee product contains from 5 to 20% by weight of the roast and ground coffee.

The roast and ground coffee particles in the coffee product preferably have a particle size distribution such that 99.9% is less than 100 $\mu$m, 98% is less than 75 $\mu$m, 95% is less than 60 $\mu$m, 90% is less than 45 $\mu$m and 50% is less than 15 $\mu$m.

The present invention will be further described with reference to the following Example.

EXAMPLE

Colombian and Robusta beans were roasted to 30 and 40° Lumetron respectively and blended in the weight ratio of 40:60. 30 kg of the roasted coffee blend were then passed through an Alpine Contraplex 250 Pin Mill. Liquid nitrogen was introduced into both the cooling screw feeder and the milling chamber. The liquid nitrogen acts as an embrittling agent and as a low temperature method of retaining the volatile aromas. Cold air from the mill was filtered and recycled to reduce the amount of liquid nitrogen required. The milling chamber temperature was recorded at -42°C and the emergent air temperature at -38°C. Particle size measurements of the ground coffee product were made by means of a Coulter Counter. The following size profile was obtained: 99.9% was less than 100 $\mu$m, 98% was less than 75 $\mu$m, 95% was less than 60 $\mu$m, 90% was less than 45 $\mu$m and 50% was less than 20 $\mu$m.

20 kg of the resultant ground coffee product was added to 30 kg of a coffee extract (38% soluble solids) at 10°C and mixed with the use of a high speed stirrer for 20 minutes. The resulting pre mix (40% by weight of roast and ground coffee) was then passed through a Silverson high shear mixer. The homogeneous mixture was then fed into a jacketed mixing tank fitted with a rotating helix. 150 kg of extract at 38% soluble solids and 10°C was then added to the tank, together with about 60 kg frozen coffee fines (200 microns) recycled from the screen at the end of the belt. The mixture was then agitated for a further 30 minutes. The mixture was then fed onto a freezing belt and frozen at -45°C. The frozen slab was broken down, ground and screened and freeze dried in a conventional manner. As mentioned above frozen coffee fines having a particle size of less than 200 $\mu$m were recycled in the process to the jacketed mixing tank.

The freeze dried product was judged by experts to have a high "in-cup" body and a pleasing ground coffee flavour.

## Claims

1. A process for the preparation of a substantially homogeneous freeze dried coffee product, which process comprises the steps of

    i) mixing a coffee extract at a temperature in the range of from 0° to 20°C with from 10 to 60% by weight of roast and ground coffee particles based on the weight of the two coffee constituents, the said particles having a particle size such that 98% by weight of the ground coffee passes a 75 $\mu$m mesh;

    ii) subjecting the mixture from step (i) to homogenization;

    iii) passing the homogenized mixture from step (ii) to a mixing tank and adding thereto at least an equivalent weight of coffee extract at a temperature in the range of from minus 5 to 30°C and from 20 to 40% by weight of frozen coffee fines based on the weight of the homogenized extract and the coffee extract;

    iv) freezing the mixture from step (iii);

    v) grinding the frozen coffee product;

    vi) screening the ground frozen coffee product from step (v); and

    vii) subjecting frozen particles of an appropriate size to freeze drying.

2. A process is claimed in claim 1 wherein the mixing in step (i) is carried out at a temperature in the range of from 5° to 15°C.

3. A process as claimed in claim 1 or claim 2 wherein the extract is mixed in step (i) with from 20 to 40% by weight of the roast and ground coffee particles based on the weight of the two coffee constituents.

4. A process as claimed in any one of the preceding claims wherein the roast and ground coffee particles added in step (i) have a particle size distribution such that 99.9% are less than 100 $\mu$m, 98% are less than 75 $\mu$m, 95% are less than 60 $\mu$m, 90% are less than 45 $\mu$m and 50% are less than 15 $\mu$m.

5. A process as claimed in any one of the preceding claims wherein the mixture from step (i) is homogenized using a high shear mechanical mixer.

6. A process as claimed in any one of the preceding claims wherein the homogenized mixture from step (ii) is passed to a mixing tank fitted with a ribbon-type helix.

7. A process as claimed in any one of the preceding claims wherein in step (iii) the homogenized mixture is mixed with from 3 to 5 times by weight of additional extract at a temperature in the range of from minus 5 to 10°C, preferably in the range of from 0° to 2° C.

8. A process as claimed in any one of the preceding claims wherein the frozen coffee fines added in step (iii) are at a temperature in the range of from minus 10° to minus 50° C.

9. A process as claimed in any one of the preceding claims wherein the frozen coffee fines are added in an amount of from 30 to 40% by weight based upon the weight of the homogenized mixture and additional extract.

10. A process as claimed in any one of the preceding claims wherein the mixture leaves the mixing tank in step (iii) at a temperature in the range of from minus 10° to minus 2° C.

11. A process as claimed in any one of the preceding claims wherein the frozen coffee product is ground and screened in step (v) and frozen coffee fines having a particle size of less than 200 micrometres are recycled to step (iii) of the process.

12. A process as claimed in any one of the preceding claims wherein step (vii) particles of a size above 200 micrometres are subjected to freeze drying.

13. A process as claimed in any one of the preceding claims which is carried out continuously.

14. A substantially homogeneous freeze dried coffee product which comprises soluble coffee particles and finely ground roast coffee, the finely ground roast coffee being homogenously and uniformly dispersed throughout the product and being present in an amount of from 2 to 50% by weight based on the weight of the two coffee constituents and having a particle size such that 98% by weight of the ground coffee passes a 75 micrometre mesh.

15. A coffee product as claimed in claim 14 which comprises from 5 to 10% by weight of the roast and ground coffee particles having a particle size distribution such that 99.9% are less than 100 micrometres, 98% are less than 75 micrometres, 95% are less than 60 micrometres, 90% are less than 45 micrometres and 50% are less than 15 micrometres.

**Revendications**

1. Procédé de préparation d'un produit de café lyophilisé essentiellement homogène, ledit procédé comprenant les phases qui consistent à :

i) mélanger un extrait de café, à une température comprise dans la plage de 0 à 20°C, à 10 à 60 % en poids de particules de café torréfié et moulu, par rapport au poids des deux constituants de café, lesdites particules ayant une grosseur telle que 98 % en poids du café moulu passent à travers des mailles de 75 $\mu$m ;

ii) soumettre le mélange de la phase (i) à une homogénéisation ;

iii) faire passer le mélange homogénéisé de la phase (ii) dans une cuve de mélange et y ajouter au moins un poids équivalent d'extrait de café, à une température comprise dans la plage de -5° C à +30° C, et 20 à 40 % en poids de fines de café congelé, par rapport au poids de l'extrait homogénéisé et de l'extrait de café ;

iv) congeler le mélange de la phase (iii) ;

v) moudre le produit de café congelé ;

vi) tamiser le produit de café congelé et moulu de la phase (v) ; et

vii) soumettre les particules congelées, d'une grosseur adéquate, à une opération de lyophilisation.

2. Procédé selon la revendication 1, caractérisé en ce qu'on le mélange de la phase (i) est réalisé à une température comprise entre 5 et 15° C.

3. Procédé selon la revendication 1 ou 2, caractérisé en ce que l'extrait est mélangé, dans la phase (i), à 20 à 40 % en poids des particules de café torréfié et moulu, par rapport au poids des deux constituants de café.

4. Procédé selon l'une quelconque des revendications précédentes, caractérisé en ce que les particules de café torréfié et moulu ajoutées dans la phase (i) présentent une répartition granulométrique telle que 99,9 % de ces particules sont inférieures à 100 $\mu$m, 98 % sont inférieures à 75 $\mu$m, 95 % sont inférieures à 60 $\mu$m, 90 % sont inférieures à 45 $\mu$m et 50 % sont inférieures à 15 $\mu$m.

5. Procédé selon l'une quelconque des revendications précédentes, caractérisé en ce que le mélange de la phase (i) est homogénéisé au moyen d'un malaxeur mécanique à cisaillement intime.

6. Procédé selon l'une quelconque des revendications précédentes, caractérisé en ce que le mélange homogénéisé de la phase (ii) est introduit dans une cuve de mélange pourvue d'une hélice du type courroie.

7. Procédé selon l'une quelconque des revendications précédentes, caractérisé en ce que, dans la phase (iii), le mélange homogénéisé est mélangé à 3 à 5 fois en poids d'extrait supplémentaire, à une température comprise entre -5°C et +10°C, de préférence entre 0°C et +2°C.

8. Procédé selon l'une quelconque des revendications précédentes, caractérisé en ce que les fines de café congelé ajoutées dans la phase (iii) sont à une température comprise entre -10°C et -50°C.

9. Procédé selon l'une quelconque des revendications précédentes, caractérisé en ce que les fines de café congelé sont ajoutées à raison d'une quantité de 30 à 40 %, par rapport au poids du mélange homogénéisé et de l'extrait supplémentaire.

10. Procédé selon l'une quelconque des revendications précédentes, caractérisé en ce que le mélange sort de la cuve de mélange, dans la phase (iii), à une température comprise entre -10°C et -2°C.

11. Procédé selon l'une quelconque des revendications précédentes, caractérisé en ce que le produit de café congelé est moulu et tamisé, dans la phase (v), et les fines de café congelé ayant une grosseur de particules inférieure à 200 μm sont recyclées dans la phase (iii) du procédé.

12. Procédé selon l'une quelconque des revendications précédentes, caractérisé en ce que, dans la phase (vii), les particules ayant une grosseur supérieure à 200 μm sont soumises à une lyophilisation.

13. Procédé selon l'une quelconque des revendications précédentes, caractérisé en ce qu'il est réalisé en continu.

14. Produit de café lyophilisé, essentiellement homogène, caractérisé en ce qu'il contient des particules de café soluble et du café torréfié finement moulu, le café torréfié finement moulu étant réparti de façon homogène et régulière dans tout le produit, à raison d'une quantité de 2 à 50 % en poids, par rapport au poids des deux constituants de café, et ayant une grosseur de particules telle que 98 % en poids du café moulu passent à travers une maille de 75

μm.

15. Produit de café selon la revendication 14, caractérisé en ce qu'il contient de 5 à 10 % en poids des particules de café torréfié et moulu, présentant une répartition granulométrique telle que 99,9 % desdites particules sont inférieures à 100 μm, 98 % sont inférieures à 75 μm, 95 % sont inférieures à 60 μm, 90 % sont inférieures à 45 μm et 50 % sont inférieures à 15 μm.

## Ansprüche

1. Verfahren zur Herstellung eines im wesentlichen homogenen, gefriergetrockneten Kaffeeprodukts, wobei das Verfahren die Schritte umfasst:

i) Vermischen eines Kaffee-Extrakts bei einer Temperatur im Bereich von 0° bis 20°C mit von 10 bis 60 Gew.-% an gerösteten und gemahlenen Kaffeeteilchen auf Basis des Gewichts der beiden Kaffee-Bestandteile, wobei die Teilchen eine solche Teilchengröße haben, daß 98 Gew.-% des gemahlenen Kaffees ein 75 μm Sieb passieren;

ii) Unterwerfen der Mischung aus Schritt (i) einer Homogenisierung;

iii) Leiten der homogenisierten Mischung aus Schritt (ii) zu einem Mischtank und Zugeben von mindestens einem Äquivalenzgewicht an Kaffee-Extrakt bei einer Temperatur im Bereich von minus 5 bis 30°C und von 20 bis 40 Gew.-% an gefrorenen Kaffee-Feinanteilen auf Basis des Gewichts des homogenisierten Extrakts und des Kaffee-Extrakts;

iv) Einfrieren der Mischung aus Schritt (iii);

v) Mahlen des gefrorenen Kaffeeprodukts;

vi) Durchmustern des gemahlenen gefrorenen Kaffeeprodukts aus Schritt (v) und

vii) Gefriertrocknen von gefrorenen Teilchen mit einer geeigneten Größe.

2. Verfahren nach Anspruch 1, worin das Vermischen in Schritt (i) bei einer Temperatur im Bereich von 5° bis 15°c durchgeführt wird.

3. Verfahren nach Anspruch 1 oder 2, worin der Extrakt in Schritt (i) mit von 20 bis 40 Gew.-% der gerösteten und gemahlenen Kaffeeteilchen auf Basis des Gewichts der beiden Kaffee-Bestandteile vermischt wird.

4. Verfahren nach einem der vorhergehenden Ansprüche, worin die in Schritt (i) zugegebenen gerösteten und gemahlenen Kaffeeteilchen eine solche Teilchengrößenverteilung haben, daß 99,9% weniger als 100 um, 98% weniger als 75 um, 95% weniger als 60 $\mu$m, 90% weniger als 45 $\mu$m und 50% weniger als 15 $\mu$m sind.

5. Verfahren nach einem der vorhergehenden Ansprüche, worin die Mischung aus Schritt (i) unter Verwendung eines mechanischen Mischers mit hoher Scherung homogenisiert wird.

6. Verfahren nach einem der vorhergehenden Ansprüche, worin die homogenisierte Mischung aus Schritt (ii) zu einem Mischtank geleitet wird, der mit einer bandartigen Schnecke ausgestattet ist.

7. Verfahren nach einem der vorhergehenden Ansprüche, worin in Schritt (iii) die homogenisierte Mischung mit von 3 bis 5mal dem Gewicht an zusätzlichem Extrakt bei einer Temperatur im Bereich von minus 5 bis 10° C, vorzugsweise im Bereich von 0° bis 2° C vermischt wird.

8. Verfahren nach einem der vorhergehenden Ansprüche, worin die in Schritt (iii) zugebenen gefrorenen Kaffee-Feinanteile bei einer Temperatur im Bereich von minus 10° bis minus 50° C sind.

9. Verfahren nach einem der vorhergehenden Ansprüche, worin die gefrorenen Kaffee-Feinanteile in einer Menge von 30 bis 40 Gew.-% auf Basis des Gewichts der homogenisierten Mischung und des zusätzlichen Extrakts zugegeben werden.

10. Verfahren nach einem der vorhergehenden Ansprüche, worin die Mischung den Mischtank in Schritt (iii) bei einer Temperatur im Bereich von minus 10° bis minus 2° C verläßt.

11. Verfahren nach einem der vorhergehenden Ansprüche, worin das gefrorene Kaffeeprodukt in Schritt (v) gemahlen und durchmustert wird und gefrorene Kaffee-Feinanteile mit einer Teilchengröße von weniger als 200 Mikrometer zu Schritt (iii) des Verfahrens rückgeführt werden.

12. Verfahren nach einem der vorhergehenden Ansprüche, wo in Schritt (vii) Teilchen einer Größe oberhalb 200 Mikrometer einem Gefriertrocknen unterworfen werden.

13. Verfahren nach einem der vorhergehenden Ansprüche, das kontinuierlich durchgeführt wird.

14. Ein im wesentlichen homogenes, gefriergetrocknetes Kaffeeprodukt, das lösliche Kaffeeteilchen und fein gemahlenen Röstkaffee enthält, wobei der feingemahlene Röstkaffee homogen und gleichförmig im Produkt dispergiert ist und in einer Menge von 2 bis 50 Gew.-% auf Basis des Gewichts der beiden Kaffee-Bestandteile vorliegt und eine solche Teilchengröße hat, daß 98 Gew.-% des gemahlenen Kaffees ein 75 Mikrometer Sieb passieren.

15. Kaffeeprodukt nach Anspruch 14, das von 5 bis 10 Gew.-% der gerösteten und gemahlenen Kaffeeteilchen enthält, die eine solche Teilchengrößenverteilung haben, daß 99,9% weniger als 100 Mikrometer, 98% weniger als 75 Mikrometer, 95% weniger als 60 Mikrometer, 90% weniger als 45 Mikrometer und 50% weniger als 15 Mikrometer sind.